# FASCICULE DE BREVET EUROPEEN

(11) **EP 1 557 358 B1**
(45) Date de publication et mention de la délivrance du brevet: **24.01.2007**
(21) Numéro de dépôt: 05290105.5
(22) Date de dépôt: 18.01.2005
(51) Int. Cl.: B64G 1/64, B64G 1/22, F15B 15/19, F16D 9/02

(54) **Dispositif actionneur à commande thermique**
Thermisch aktivierter Betätiger
Thermally activated actuator

(30) Priorité: 26.01.2004 FR 0400716
(43) Date de publication de la demande: 27.07.2005
(73) Titulaire: ETIENNE LACROIX TOUS ARTIFICES S.A., 31600 Muret (FR)
(72) Inventeur: Crabol, Stéphane, 31400 Toulouse (FR); Valembois, Guy, 31700 Beauzelle (FR); Poveda, Patrick, 31270 Frouzins (FR)
(74) Mandataire: Texier, Christian

(56) Documents cités:
- WO-A-02/01078
- FR-A- 2 063 759
- FR-A- 2 806 788
- US-A- 2 866 342
- US-A- 4 158 322

## Description

La présente invention concerne le domaine des dispositifs actionneurs à commande thermique.

Plus précisément la présente invention concerne le domaine des dispositifs comprenant un corps, une pièce immobilisée par rapport au corps par un matériau de liaison à bas point de fusion, par exemple une brasure ou un moyen équivalent, et une masse de matériau exothermique apte à dégager sur commande une énergie thermique intense propre à fondre le matériau de liaison pour libérer la pièce par rapport au corps.

Différents dispositifs du type précité ont déjà été proposés.

On trouvera un exemple de tels dispositifs dans le document FR-A-2 806 788.

La présente invention trouve en particulier application dans le domaine aérospatial, notamment pour la mise en oeuvre d'équipements divers sur des satellites, tels que le déploiement de panneaux solaires ou la libération d'éléments spécifiques.

Les dispositifs connus du type précité ont déjà rendu de grands services.

Cependant il s'avère que leur fonctionnement dans des conditions particulières d'accélération, de pesanteur ou d'apesanteur, ne donne pas toujours satisfaction.

La Demanderesse a constaté en particulier que dans certaines configurations, les dispositifs connus ne permettent pas toujours une libération satisfaisante de la pièce immobilisée.

La présente invention a pour objectif principal de proposer un nouveau dispositif actionneur à commande thermique qui permette d'éliminer les inconvénients de la technique antérieure.

Ce but est atteint dans le cadre de la présente invention grâce à un dispositif actionneur à commande thermique du type précité dans lequel la chambre qui loge le matériau exothermique est scindée en plusieurs compartiments propres à confiner ledit matériau en contact thermique étroit avec la paroi de la chambre.

Selon un premier mode de réalisation conforme à la présente invention, la chambre est constituée d'un logement formé dans un corps principal et divisé par une pluralité de disques ou coupelles.

Selon un deuxième mode de réalisation conforme à la présente invention, la chambre est formée d'une pluralité de puits ménagés dans le corps principal.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente une vue schématique d'un dispositif actionneur à commande thermique connu de l'état de la technique,
- la figure 2 représente un premier mode de réalisation de chambre conforme à la présente invention, scindée par une pluralité de disques ou coupelles, et
- les figures 3, 4 et 5 représentent respectivement en perspective, en coupe et en vue de face, une chambre conforme à un deuxième mode de réalisation de la présente invention.

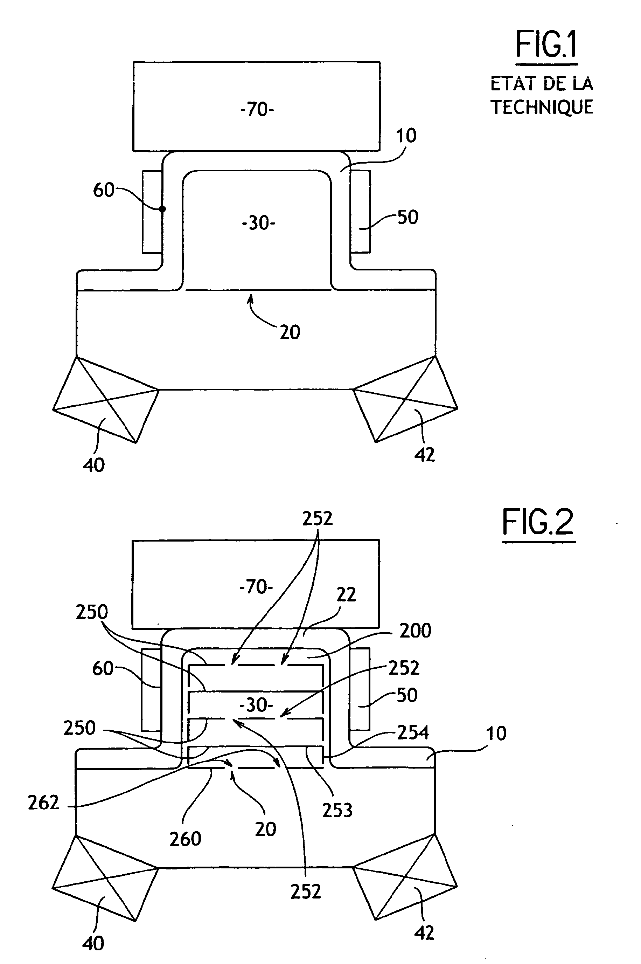

On a représenté sur la figure 1 un dispositif classique connu de la technique antérieure auquel la présente invention peut s'appliquer.

On aperçoit sur cette figure 1 un dispositif actionneur connu comprenant un corps 10 qui définit une chambre 20 logeant une masse 30 de matériau exothermique, associée à des initiateurs 40, 42, et une bague (par exemple en acier inoxydable) 50 fixée par un matériau à bas point de fusion, de préférence brasée, en 60 sur le corps 10 et propre à activer un organe 70, lors de sa libération.

Un tel dispositif est connu de l'état de la technique, notamment du document FR-A-2 806 788. Il ne sera donc pas décrit plus en détail par la suite.

Après de nombreux tests et analyses, la Demanderesse a cependant déterminé que les déficiences constatées dans les conditions de fonctionnement particulières précitées, proviennent à priori du fait que dans ces conditions, les échanges thermiques entre la masse exothermique et le corps ne sont pas suffisants pour permettre de fondre le matériau de liaison (la brasure).

Plus précisément encore la Demanderesse a déterminé que la perte d'échange thermique, par rapport au comportement dans des conditions de test classiques, provient généralement d'un mauvais contact entre la paroi de la chambre et la masse exothermique. Ce mauvais contact provient généralement soit d'un écoulement du matériau exothermique sous l'effet de forces externes (pesanteur, accélération), soit de forces internes dues au comportement en apesanteur (tension superficielle), aggravé par une perte de volume du matériau pendant sa réaction, notamment lorsqu'il s'agit d'une composition chimique de type thermite.

Comme indiqué précédemment pour résoudre cette difficulté, la Demanderesse a proposé de scinder la chambre qui loge le matériau exothermique en plusieurs compartiments propres à confiner ledit matériau en contact thermique étroit avec la paroi de la chambre.

Plus précisément, selon un premier mode de réalisation conforme à la présente invention, illustré sur la figure 2 annexée, la chambre 20 est constituée d'un logement 200 formé dans un corps principal 10 et divisé par une pluralité de disques ou coupelles 250.

Plus précisément encore selon ce mode de réalisation, il est de préférence prévu plusieurs coupelles 250 empilées à distance respective, parallèlement au fond 22 de la chambre 20 et un disque de fermeture 260 qui couvre le contour d'ouverture de la chambre.

Typiquement il peut ainsi être prévu quatre coupelles 250 et un disque 260. Le disque 260 sert à « fermer » la chambre.

La section de chaque coupelle 250 et du disque 260 est complémentaire de celle de la chambre 20.

Chaque coupelle 250 est de préférence elle-même formée d'un disque 253 comportant sur sa périphérie une collerette cylindrique 254 dont la hauteur correspond à l'intervalle recherché entre les coupelles 250.

Chaque coupelle 250 et disque 260 comporte de préférence au moins un passage traversant pour permettre la transmission de l'initiation d'une masse élémentaire du matériau exothermique 30 à la masse élémentaire adjacente. Il est ainsi prévu de préférence deux alésages diamétralement opposés 252, 262 sur chaque coupelle 250 et sur le disque 260, lesdits alésages 252, 262 étant décalés angulairement d'une coupelle à l'autre, pour former un labyrinthe de confinement du matériau exothermique. Typiquement, mais non limitativement, ces alésages 252, 262 ont un diamètre de 1,5mm et sont positionnés sur un diamètre de 9mm sur des coupelles 250 et disque 260 d'une épaisseur de 0,5mm.

Les coupelles 250 et le disque 260 peuvent être formés en tout matériau bon conducteur thermique et présentant un point de fusion supérieur à la température de fonctionnement du matériau exothermique.

Il peut s'agir par exemple de titane ou d'un mélange Cuivre/Tungstène, par exemple Cu28/W72. Ce dernier matériau présente une excellente diffusivité thermique (rapport de la conductivité sur la chaleur spécifique). Cette caractéristique assure un transfert thermique très important des calories de la composition en combustion vers la paroi interne de la chambre (et donc vers le joint de brasure).

Le corps 10 peut lui-même être formé en tout matériau approprié, par exemple à base d'acier inoxydable, de cuivre/tungstène ou de titane, selon que l'on privilégie l'aspect résistance mécanique ou la conductivité thermique.

Dans le cadre de la présente invention, avantageusement pour permettre un confinement satisfaisant du matériau exothermique et un bon échange thermique vers la brasure, le rapport entre le diamètre d'une chambre élémentaire définie par une coupelle 250 ou disque 260 et son épaisseur est compris entre 1,5 et 5, de préférence entre 2 et 4, avantageusement de l'ordre de 2,4.

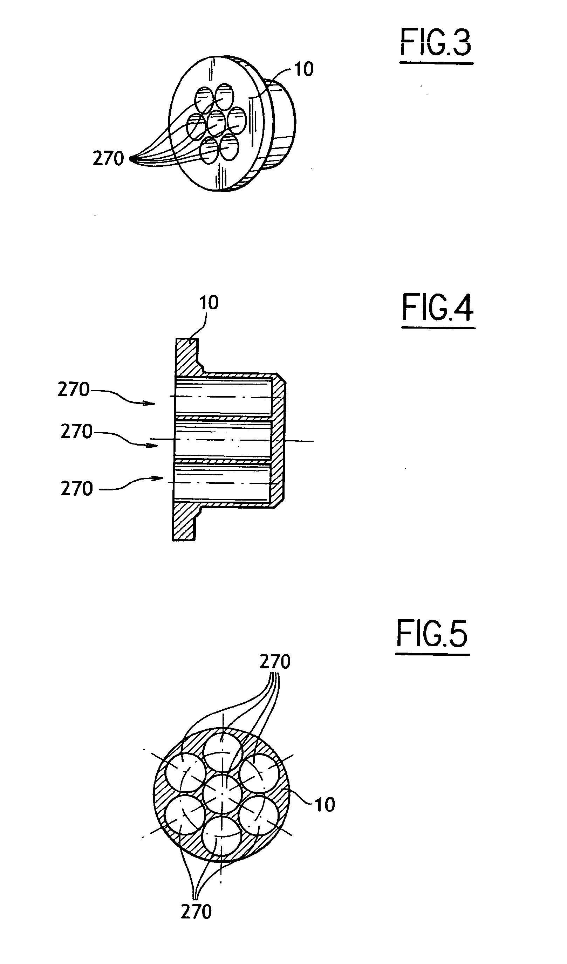

Selon un deuxième mode de réalisation conforme à la présente invention, illustré sur les figures 3 à 5, la chambre 20 est formée d'une pluralité de puits borgnes 270 ménagés dans le corps principal 10.

Le corps 10 peut être réalisé en tout matériau approprié, par exemple en acier inoxydable, titane, ou tout matériau équivalent, tel qu'un mélange Cuivre/Tungstène, par exemple Cu28/W72.

Le cas échéant les puits 270 peuvent être recouverts par un disque 260 conforme à celui illustré sur la figure 2 et précédemment décrit pour le premier mode de réalisation.

On a ainsi illustré sur les figures 3 à 5 annexées un mode de réalisation conforme à la présente invention dans lequel la chambre 20 est formée de sept puits d'un diamètre de l'ordre de 4,7mm et d'une profondeur de l'ordre de 11,5mm (un puits central entouré d'une couronne de six puits périphériques régulièrement répartis angulairement) dans un corps en acier inoxydable possédant un diamètre externe de 16mm et une hauteur de 13,8mm.

Le rapport entre la profondeur d'un puits 270 et son diamètre est du même ordre de grandeur que celui du rapport entre le diamètre d'une chambre élémentaire définie par une coupelle 250 ou disque 260 et son épaisseur selon le premier mode de réalisation. Il est ainsi compris entre 1,5 et 5, de préférence entre 2 et 4, avantageusement de l'ordre de 2,4.

Typiquement, mais non limitativement, dans le cadre de la présente invention, la masse exothermique est formée d'une thermite, par exemple d'un mélange à base d'oxyde de fer (Fe₃O₄) et d'aluminium, tandis que la brasure est formée à base d'or et d'étain ou de cadmium et de zinc.

Bien entendu la présente invention n'est pas limitée aux modes de réalisation précédemment décrits mais s'étend à toutes variantes conformes à son esprit.

L'homme de l'art comprendra que les moyens proposés dans le cadre de la présente invention permettent de maintenir confiner la composition pyrotechnique dans son volume initial de chargement, lors de la phase de combustion, et d'assurer les échanges thermiques vers les parois de la chambre, et ceci plus particulièrement dans des conditions de micro-gravité.

## Revendications

1. Dispositif actionneur à commande thermique du type comprenant un corps (10), une pièce (50) immobilisée par rapport au corps (10) par un matériau de liaison à bas point de fusion, par exemple une brasure (60) ou un moyen équivalent, et une masse de matériau exothermique (30) apte à dégager sur commande une énergie thermique intense propre à fondre le matériau de liaison (60) pour libérer la pièce (50) par rapport au corps (10), **caractérisé par le fait que** la chambre (20) qui loge le matériau exothermique (30) est scindée en plusieurs compartiments propres à confiner ledit matériau (30) en contact thermique étroit avec la paroi de la chambre (20).

2. Dispositif selon la revendication 1, **caractérisé par le fait que** la chambre (20) est constituée d'un logement formé dans un corps principal (10) et divisé par une pluralité de disques ou coupelles (250, 260).

3. Dispositif selon l'une des revendications 1 ou 2, **caractérisé par le fait qu'**il comprend plusieurs coupelles (250) empilées à distance respective, parallèlement au fond (22) de la chambre (20) et un disque de fermeture (260) qui couvre le contour d'ouverture de la chambre.

4. Dispositif selon la revendication 3, **caractérisé par le fait qu'**il comprend quatre coupelles (250) et un disque (260).

5. Dispositif selon l'une des revendications 2 à 4, **caractérisé par le fait que** la section de chaque coupelle (250) et du disque (260) est complémentaire de celle de la chambre (20).

6. Dispositif selon l'une des revendications 2 à 5, **caractérisé par le fait que** chaque coupelle (250) est elle-même formée d'un disque (252) comportant sur sa périphérie une collerette cylindrique (254) dont la hauteur correspond à l'intervalle recherché entre les coupelles (250).

7. Dispositif selon l'une des revendications 2 à 6, **caractérisé par le fait que** chaque coupelle (250) et disque (260) comporte au moins un passage traversant pour permettre la transmission de l'initiation d'une masse élémentaire du matériau exothermique (30) à la masse élémentaire adjacente.

8. Dispositif selon la revendication 7, **caractérisé par le fait que** les passages traversants sont décalés angulairement d'une coupelle à l'autre, pour former un labyrinthe de **confinement** du matériau exothermique.

9. Dispositif selon l'une des revendications 2 à 8, **caractérisé par le fait que** les coupelles (250) ou disque (260) sont réalisés à base de titane ou d'un mélange Cuivre/Tungstène.

10. Dispositif selon l'une des revendications 2 à 9, **caractérisé par le fait que** le rapport entre le diamètre d'une chambre élémentaire définie par une coupelle (250) ou disque (260) et son épaisseur est compris entre 1,5 et 5, de préférence entre 2 et 4, avantageusement de l'ordre de 2,4.

11. Dispositif selon la revendication 1, **caractérisé par le fait que** la chambre (20) est formée d'une pluralité de puits (270) ménagés dans le corps principal.

12. Dispositif selon la revendication 11, **caractérisé par le fait que** le corps (10) dans lequel est réalisée la chambre (20) est formé en acier inoxydable, titane, ou d'un mélange Cuivre/Tungstène.

13. Dispositif selon l'une des revendications 11 et 12, **caractérisé par le fait que** les puits (270) sont recouverts par un disque (260) comportant au moins un passage traversant.

14. Dispositif selon l'une des revendications 11 à 13, **caractérisé par le fait que** chaque puits (270) a un diamètre de l'ordre de 4,7mm.

15. Dispositif selon l'une des revendications 11 à 14, **caractérisé par le fait que** le rapport entre la profondeur d'un puits (270) et son diamètre est compris entre 1,5 et 5, de préférence entre 2 et 4, avantageusement de l'ordre de 2,4.

## Claims

1. Thermally activated actuator of the type comprising a body (10), a part (50) immobilized relative to the body (10) by a low-melting-point bonding material, for example a solder (60) or an equivalent means, and a mass of exothermic material (30) capable of releasing, on command, an intense amount of thermal energy suitable for melting the bonding material (60) in order to release the part (50) relative to the body (10), **characterized in that** the chamber (20) that houses the exothermic material (30) is divided into several compartments suitable for confining said material (30) in close thermal contact with the wall of the chamber (20).

2. Actuator according to Claim 1, **characterized in that** the chamber (20) consists of a housing formed in a main body (10) and divided by a plurality of discs or dishes (250, 260).

3. Actuator according to either of Claims 1 and 2, **characterized in that** it comprises several dishes (250) stacked, at a respective distance, parallel to the end wall (22) of the chamber (20) and a closure disc (260) that covers the opening profile of the chamber.

4. Actuator according to Claim 3, **characterized in that** it comprises four dishes (250) and a disc (260).

5. Actuator according to one of Claims 2 to 4, **characterized in that** the cross section of each dish (250) and of the disc (260) is complementary to that of the chamber (20).

6. Actuator according to one of Claims 2 to 5, **characterized in that** each dish (250) is itself formed from a disc (252) having on its periphery a cylindrical flange (254), the height of which corresponds to the desired gap between the dishes (250).

7. Actuator according to one of Claims 2 to 6, **characterized in that** each dish (250) and disc (260) includes at least one through-passage for transmitting the initiation of one elementary mass of the exothermic material (30) to the adjacent elementary mass.

8. Actuator according to Claim 7, **characterized in that** the through-passages are offset angularly from one dish to another, in order to form the labyrinth for confining the exothermic material.

9. Actuator according to one of Claims 2 to 8, **characterized in that** the dishes (250) or disc (260) are based on titanium or on a copper/tungsten alloy.

10. Actuator according to one of Claims 2 to 9, **characterized in that** the ratio of the diameter of an elementary chamber defined by a dish (250) or disc (260) to its thickness is between 1.5 and 5, preferably between 2 and 4 and advantageously about 2.4.

11. Actuator according to Claim 1, **characterized in that** the chamber (20) is formed by a plurality of wells (270) made in the main body.

12. Actuator according to Claim 11, **characterized in that** the body (10) in which the chamber (20) is made is formed from stainless steel, titanium, or copper/tungsten alloy.

13. Actuator according to either of Claims 11 and 12, **characterized in that** the wells (270) are covered by a disc (260) that includes at least one through-passage.

14. Actuator according to one of Claims 11 to 13, **characterized in that** each well (270) has a diameter of about 4.7 mm.

15. Actuator according to one of Claims 11 to 14, **characterized in that** the ratio of the depth of a well (270) to its diameter is between 1.5 and 5, preferably between 2 and 4 and advantageously about 2.4.

## Patentansprüche

1. Auslösevorrichtung mit thermischer Betätigung vom Typ der folgendes umfaßt: einen Korpus (10), ein Teil (50), das gegenüber dem Korpus (10) durch ein Verbindungsmaterial mit niedrigem Schmelzpunkt festgestellt ist, beispielsweise eine Lötung (60) oder ein gleichwertiges Mittel, und eine Masse aus einem exothermen Material (30), die dafür eingerichtet ist, auf Befehl eine starke thermische Energie freizusetzen, die dafür geeignet ist, das Verbindungsmaterial (60) zu schmelzen, um das Teil (50) gegenüber dem Korpus (10) freizugeben, **dadurch gekennzeichnet, daß** die Kammer (20), die das exotherme Material (30) aufnimmt, in mehrere Abteile aufgeteilt ist, die dafür geeignet sind, das Material (30) in engem thermischen Kontakt mit der Wand der Kammer (20) einzuschließen.

2. Vorrichtung nach Anspruch 1, **dadurch gekennzeichnet, daß** die Kammer (20) aus einer Aufnahmehöhlung besteht, die in einem Haupt-Korpus (10) ausgebildet und durch mehrere Scheiben oder Schalen (250, 260) unterteilt ist.

3. Vorrichtung nach einem der Ansprüche 1 oder 2, **dadurch gekennzeichnet, daß** sie mehrere Schalen (250), die parallel zum Boden (22) der Kammer (20) mit einem jeweiligen Abstand gestapelt sind, und eine Verschlußscheibe (260), die die Öffnungskontur der Kammer abdeckt, umfaßt.

4. Vorrichtung nach Anspruch 3, **dadurch gekennzeichnet, daß** sie vier Schalen (250) und eine Scheibe (260) umfaßt.

5. Vorrichtung nach einem der Ansprüche 2 bis 4, **dadurch gekennzeichnet, daß** der Querschnitt jeder Schale (250) und der Scheibe (260) komplementär zu demjenigen der Kammer (20) ist.

6. Vorrichtung nach einem der Ansprüche 2 bis 5, **dadurch gekennzeichnet, daß** jede Schale (250) selbst aus einer Scheibe (252) gebildet ist, die an ihrem Rand einen zylindrischen Kragen (254) umfaßt, dessen Höhe dem geforderten Abstand zwischen den Schalen (250) entspricht.

7. Vorrichtung nach einem der Ansprüche 2 bis 6, **dadurch gekennzeichnet, daß** jede Schale (250) und Scheibe (260) wenigstens einen Durchlaß umfaßt, um die Übertragung der Zündung einer Einzelmasse des exothermen Materials (30) zur benachbarten Einzelmasse zu gestatten.

8. Vorrichtung nach Anspruch 7, **dadurch gekennzeichnet, daß** die Durchlässe von einer Schale zur nächsten winkelmäßig verschoben sind, um ein Einschlußlabyrinth für das exotherme Material zu bilden.

9. Vorrichtung nach einem der Ansprüche 2 bis 8, **dadurch gekennzeichnet, daß** die Schalen (250) oder die Scheibe (260) auf der Basis von Titan oder einer Kupfer/Wolfram-Mischung ausgeführt sind.

10. Vorrichtung nach einem der Ansprüche 2 bis 9, **dadurch gekennzeichnet, daß** das Verhältnis zwischen dem Durchmesser einer Einzelkammer, die durch eine Schale (250) oder Scheibe (260) definiert wird, und ihrer Dicke zwischen 1,5 und 5, vorzugsweise zwischen 2 und 4 und vorteilhafterweise bei etwa 2,4 liegt.

11. Vorrichtung nach Anspruch 1, **dadurch gekennzeichnet, daß** die Kammer (20) aus mehreren Schächten (270) gebildet ist, die im Haupt-Korpus ausgeführt sind.

12. Vorrichtung nach Anspruch 11, **dadurch gekennzeichnet, daß** der Korpus (10), in dem die Kammer (20) ausgebildet ist, aus rostfreiem Stahl, Titan oder einer Kupfer/Wolfram-Mischung ausgeführt ist.

13. Vorrichtung nach einem der Ansprüche 11 und 12, **dadurch gekennzeichnet, daß** die Schächte (270) von einer Scheibe (260) abgedeckt sind, die wenigstens einen Durchlaß umfaßt.

14. Vorrichtung nach einem der Ansprüche 11 bis 13, **dadurch gekennzeichnet, daß** jeder Schacht (270) einen Durchmesser von etwa 4,7 mm hat.

15. Vorrichtung nach einem der Ansprüche 11 bis 14, **dadurch gekennzeichnet, daß** das Verhältnis zwischen der Tiefe eines Schachts (270) und seinem Durchmesser zwischen 1,5 und 5, vorzugsweise zwischen 2 und 4 und vorteilhafterweise bei etwa 2,4 liegt.
